Europäisches Patentamt

European Patent Office

Office européen des brevets

(11) Publication number: **0 046 621**

**A1**

(12) # EUROPEAN PATENT APPLICATION

(21) Application number: **81200921.5**

(22) Date of filing: **19.08.81**

(51) Int. Cl.³: **F 17 C 13/12**
**B 60 K 15/08**

(30) Priority: **22.08.80 NL 8004779**

(43) Date of publication of application:
**03.03.82 Bulletin 82/9**

(84) Designated Contracting States:
**AT BE CH DE FR GB IT LI LU NL SE**

(71) Applicant: **Snelder B.V.**
**Ontariodreef 33-41**
**NL-3565 BB Utrecht(NL)**

(72) Inventor: **Schuurman, Eiko Albertus**
**Rechthuisdrift 70**
**NL-3436 CZ Nieuwegein(NL)**

(74) Representative: **Mommaerts, Johan Hendrik,**
**Dipl.-Phys.**
**Octrooibureau Lux Nassau-Odyckstraat 38**
**NL-2596 AJ Den Haag(NL)**

(54) **A method for protecting a tank for liquefied fuel gas, and a filler intended for this purpose for such a tank.**

(57) To protect a tank containing liquefied gas such as LPG, a method of filling the tank (1) with a first portion containing the liquefied gas (5) and keeping free the remaining portion having second volume value as a gas cushion (7). An additional filling (12) is provided which at an increase of the pressure above the normal filling pressure is compressible or comprises compressible parts such that at prevailing overpressures a volume difference equal to the second volume value can be absorbed by the additional filling. The filling can have the shape of a coherent porous coating layer on the inner wall of the tank.

Fig. 2

EP 0 046 621 A1

A method for protecting a tank for liquefied gas, and a filler
intended for this purpose for such a tank.
_____

It becomes more and more usual to use liquefied gas (LPG)
as a fuel for internal combustion engines. Since the gas is liquefied
under pressure, and the liquid has a relatively low boiling temperature, tanks serving for containing such a gas must comply with
stringent requirements.

In connection with the expansion of the liquefied gas on
heating, an additional security requirement is that such a tank should
not completely be filled. In some countries the requirement of filling
up to maximally 80 % of the volume of the tank exists. It is usual to
provide such a tank with a tube of a small cross-section, extending
from the outside down to a level which is reached by the liquid at a
filling of 80 %, which tube can be closed at the outside by means of
a stop valve. During filling this valve is to be opened so that vapourised gas can escape outwards. As soon as liquid excapes, this
means that the tank has been filled for 80 %. This can also be read
on a level indicator, but the indication be means of the tube is unambiguous. In practice, however, it appears that this regulation is
often evaded, and, in particular, blowing off through said tube is
often omitted. Apart from the fact that the customer often desires a
larger filling, blowing off in the atmosphere is unfavourable since
the blown-off gas is lost, and, moreover, the escaping gas is inconvenient for the environment, and is also dangerous because of its
combustibility.

Filling valves have already been designed which co-operate with a float, and close the supply as soon as the maximally allowable filling degree has been reached. These valves will operate well only if the tank is mounted in the horizontal orientation corresponding to the orientation in which the float was adjusted, so that, when filling, the vehicle should be horizontal. By unfastening the tank and rotating it around its longitudinal axis, it is possible to fill the tank more than corresponds to its calibration orientation. This cannot be checked by the service personnel of a filling station, so that they will inconsciously co-operate in offending against the regulations.

An other proposal comprises the provision of an inner vessel having a volume of, for instance, 20 % of the over-all tank volume, which vessel is provided with two narrow passages opening in the tank proper. During filling the liquid will difficultly penetrate inwardly through these passages, their cross-section being chosen so that the inner vessel will be filled only after, for instance, 1 h. The completely filled tank will, therefore, always have a vapour space of 20 %, and, eventually, liquid will flow into the inner vessel, and outside said vessel a gas cushion will be formed which can absorb the expansion of the liquid.

Although such a composite tank can provide an effective protection against over-filling, it has several draw-backs. A first draw-back is that the manufacturing costs are very high, and that the total weight is increased accordingly. Moreover inspection of such a composite tank is more complicated. Over-filling is, furthermore, not completely excluded, if, for instance, after some time, as soon as the vapour is displaced from the inner vessel completely or partially by liquid, the tank is refilled. Moreover the security at rising temperatures will, at least shortly after filling, not be complete, since the expanding liquid will flow with difficulty through the narrow passages into the inner vessel, and the complete security is only arrived at when an appreciable part of the inner vessel is filled with liquid.

It is an object of the invention to provide an economical and safe solution for this problem.

To that end the invention provides a method for securing such a tank allowing to fill it for only a given portion having a first volume value with liquefied gas, and to keep free the remaining portion having a second volume value as a gas cushion, which method is characterised in that, in the tank, an additional filling is provided which, at an increasing pressure above the normal filling pressure, is compressible or comprises compressible parts, so that, at the prevailing over-pressures, a volume difference equal to the second volume value can be absorbed thereby.

A filling suitable for this purpose consists, in particular, of a porous material, having a pore volume which is at least equal to the second volume value, which filling can be in the form of a coherent coating layer on the inner wall of the tank, or can consist of discrete bodies.

In order to introduce such bodies into the tank, these bodies should have a dimension which is smaller than the diameter of the filling opening of the tank, but this dimension is, preferably, only a little smaller than this diameter so as to prevent that the bodies can be easily removed from the tank. In particular, these bodies will at least partly consist of a material which, on contacting the liquefied fuel gas, will expand, and after expansion the dimensions will be larger than the diameter of the filling opening, so as to make removal of said bodies completely impossible.

Since the bodies will continuously collide with one another, these bodies can be provided with a wear-resistant cover layer so as to prevent damage.

In order to comply with the purpose as well as possible, these bodies can have, in particular, a large ratio between their outer surface area and volume, and can, for example, be cushion shaped.

The material of the filling can comprise, for instance, open pores, and the pore width can be, at least near the surface, so that the liquid will not or only difficultly penetrate into the pores, and it is also possible to use a filling material of which, at least near the surface, the pores are closed, said pores being filled with a gas. The gas-filled pores are, then, compressible, and provide the required volume reduction at increasing pressures. Closing the pores at the surface can, for instance, be done by means of the above-mentioned wear layer.

The invention will be elucidated below by reference to a drawing, showing in:

Fig. 1 a diagrammatical cross-section of a current tank for containing liquefied fuel gas; and

Fig. 2 a cross-section of an embodiment of a tank according to the invention.

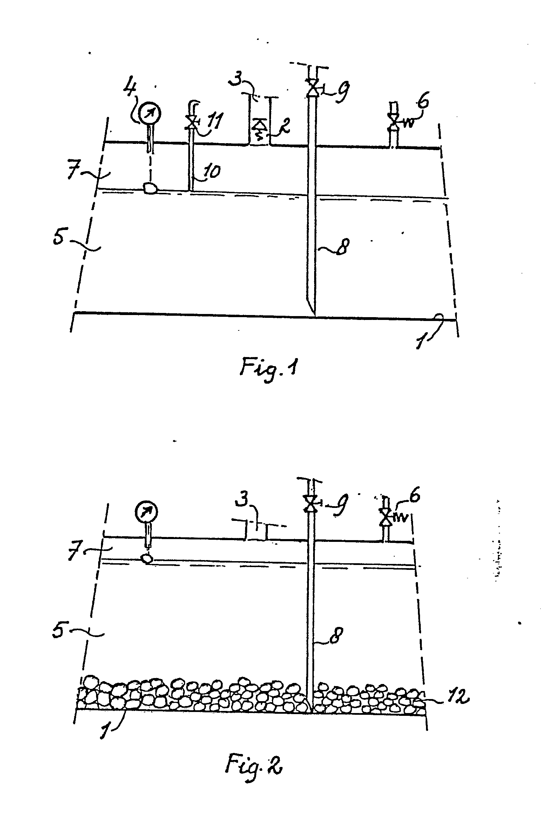

In Fig. 1 a tank 1 is diagrammatically shown in section, said tank being provided with a filling valve 2 arranged in a filling nozzle 3. Furthermore a level gauge 4 is provided allowing to determine the filling degree of the tank 1 with liquid 5. A safety valve 6 will open as soon as the pressure of the vapour cushion 7 above the liquid 5 exceeds a given maximum value. A discharge tube 8, extending to near the bottom of the tank 1 and being provided with a stop valve 9, serves for removing liquid from the tank 1.

According to current regulations, the tank should be filled with liquid maximally for 80 %, so that a vapour cushion 7 remains which is able to absorb the expansion of the liquid 5 at the prevailing temperature increment. In order to allow to determine unambiguously a filling to 80 %, a tube 10 extending from above inwardly into the tank 1 is provided, which extends to a level corresponding to a filling of 80 %. When on the level gauge 4 it is indicated that the maximum filling is approached, the valve 9 is to be opened so that vapour will escape outwards. As soon as liquid is blown off, this means that the maximum level has been reached, after which the filling should be interrupted.

With such a gas cushion a sufficient security against over-pressures at temperature rises is obtained. It should be noted that, in some countries, a smaller gas cushion is accepted.

The above-mentioned security is, however, not unambiguous, since it cannot be prevented that the tank is completely filled when, in particular, blowing off by means of the stop valve 11 is omitted.

As indicated diagrammatically in Fig. 2, an auxiliary filling 12 is provided in the tank 1, consisting, in the case shown, of discrete bodies, e.g. spheres, which for instance, as shown, are heavier than the liquid 5. The material of these bodies should now be so that, if the tank 1 is, for the rest, completely filled with liquid gas, these bodies, at a pressure rise above the normal filling pressure, can be compressed accordingly, and, therefore, can have the same effect as the above-mentioned gas cushion.

Such bodies can be realised in several manners. In principle these bodies should consist of such a compressible material that a difference between the volume at the normal filling pressure and at compression under the maximally allowable pressure corresponds to, for instance, 20 % of the over-all volume of the tank 1.

Although it is possible to use, to that end, balloons or cushions filled with a gas at the normal filling pressure, it is simpler to use therefor  bodies of a porous material, and in particular plastics foam. The interior cavities thereof form, when filled with a gas, compressible cushions.

If the pores, or at least the pores near the surface thereof, are closed, the cavities filled with a suitable gas can be compressed under over-pressure, and, after the over-pressure has disappeared, will reassume their original shape. It is, then, immaterial whether these bodies are heavier or lighter than the liquid.

It is also possible to use a material with open pores, provided that these pores are, at least near the surface, so narrow that the liquid will not or only very slowly penetrate therein. If the pores are filled with a gas or a vapour at the normal filling pressure, they will, again, form a compressible cushion which can absorb the pressure increases. Penetration of the liquid into the pores will be opposed not only by friction, but also by the surface tension. The penetration will, therefore, take place extremely slowly. If the bodies consist of a material which is lighter than the liquid, the contact time with the liquid will be as short as possible, so that, then, the probability of liquid penetration will be still smaller.

Sometimes it can be advisable to provide such porous bodies with a surface coating in order to protect the bodies against being damaged when colliding with one another. With bodies which are continuously submerged in the liquid, this probability of being damaged is smaller since the liquid damps the movements of the bodies.

A suitable material for such bodies is, for instance, polyether, which is relatively cheap. As a wear layer, nylon, teflon or the like can be used.

In order to prevent that these bodies are removed from the tank 1, it is advisable to make these bodies so large that they can be introduced just or with some effort through the opening 3. The friction should not be so high, however, that this would require too much force. Moreover the plastics will often slightly swell by the contact with the liquid so that, then, removal is no longer possible.

Furthermore the shape of these bodies can be chosen so that their compression can take place more easily, i.a. by making the ratio between the external surface area and the volume larger than that of a sphere. This can, for instance, be done by making the bodies cushion shaped.

The use of discrete bodies has the advantage that also existing tanks can be secured in this manner. It is also possible, on the other hand, to apply a coherent coating layer of a suitable porous material, e.g. plastics foam, on the inner wall of the tank.

It will be clear that the use of such additional fillings is not restricted to tanks for compressed gas used as a motor fuel, but is possible in all cases where similar problems arise.

Claims

1. A method for protecting a tank for liquefied gas, in order to fill this tank for only a definite part having a first volume value with liquefied gas, and to keep free the remaining part having a second volume value as a gas cushion, <u>characterised</u> in that in the tank an additional filling is provided which, at an increase of the pressure above the normal filling pressure, is so compressible or comprises such compressible parts that, at the prevailing over-pressures, a volume difference equal to said second volume value can be absorbed thereby.

2. A filling adapted for being used in the method of claim 1, <u>characterised</u> in that the filling has the shape of a coherent coating layer on the inner wall of the tank.

3. A filling adapted for being used in the method of claim 1, <u>characterised</u> in that the filling consists of discrete bodies.

4. The filling of claim 2 or 3, <u>characterised</u> in that it consists of a porous material having a pore volume which is at least equal to said second volume value.

5. The filling of claim 3 or 4, <u>characterised</u> in that the bodies have a dimension which is somewhat smaller than the diameter of the filling opening of the tank.

6. The filling of claim 5, <u>characterised</u> in that the bodies consist of a material swelling in contact with the liquid, and in that, after swelling, the dimensions of the bodies are larger than the diameter of said filling opening.

7. The filling of any one of claims 4..6, <u>characterised</u> in that the bodies are provided with a wear layer.

8. The filling of any one of claims 3..7, <u>characterised</u> in that the bodies have a large ratio between the external surface area and the volume.

9. The filling of any one of claims 2..8, <u>characterised</u> in that the material of the filling comprises open pores.

10. The filling of claim 8, <u>characterised</u> in that the pore width, at least near the surface, is so that the liquid will not or very difficultly penetrate into the pores.

11. The filling of any one of claims 2..8, <u>characterised</u> in that the material of the filling, at least near the surface, comprises closed pores which are filled with a gas.

Fig. 1

Fig. 2

0046621

| | European Patent Office | **EUROPEAN SEARCH REPORT** | Application number |
|---|---|---|---|
| | | | EP 81 20 0921 |

## DOCUMENTS CONSIDERED TO BE RELEVANT

| Category | Citation of document with indication, where appropriate, of relevant passages | Relevant to claim |
|---|---|---|
| X | DE - C - 875 370 (DE BATAAFSCHE PETROLEUM MAATSCHAPPIJ)<br><br>* page 2, lines 1-9, 24-33, 62-76; figures 3,4 *<br><br>-- | 1,4,5,9 |
| X | DE - C - 758 323 (DEUTSCHE ROHREN-WERKE)<br><br>* page 2, line 12 - page 3, line 4; figure *<br><br>-- | 1 |
| A | DE - C - 610 752 (H. KUNTZE et al)<br><br>------------ | 1 |

**CLASSIFICATION OF THE APPLICATION (Int. Cl.³)**

F 17 C 13/12
B 60 K 15/08

**TECHNICAL FIELDS SEARCHED (Int. Cl.³)**

B 60 K 15/08
F 17 C   1/00
          13/12

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 30-10-1981 | SIEM |

EPO Form 1503.1   06.78